# EUROPEAN PATENT SPECIFICATION

(11) **EP 3 043 280 B1**
(45) Date of publication and mention of the grant of the patent: **19.06.2019**
(21) Application number: 15305015.8
(22) Date of filing: 08.01.2015
(51) Int. Cl.: G06F 21/57

(54) **Shared access to a trusted platform module by a hypervisor and a guest operating system**
Gemeinsamer Zugriff auf ein vertrauenswürdiges Plattformmodul durch einen Hypervisor und ein Gastbetriebssystem
Accès partagé à un module de plate-forme sécurisée par un hyperviseur et un système d'exploitation invité

(43) Date of publication of application: 13.07.2016
(73) Proprietor: Hewlett-Packard Development Company, L.P., Spring TX 77389 (US)
(72) Inventor: Plaquin, David, Bristol, BS34 8QZ (GB); Balacheff, Boris, 91947 Les Ulis (FR); Chen, Liqun, Bristol, BS34 8QZ (GB); Devitt-Carolan, Taram Sierra, Palo Alto, CA 94304 (US)
(74) Representative: Stöckeler, Ferdinand

(56) References cited:
- US-A1- 2007 016 801
- US-A1- 2008 244 569
- US-A1- 2014 075 522

## Description

### FIELD OF THE DISCLOSURE

The present invention relates to computer systems, and more particularly to hypervisors.

### BACKGROUND

Computer systems may provide functionality to users by making available hypervisors that separate an operating system from hardware. A hypervisor may facilitate provision of one or multiple "guest" operating systems from a same hardware component. In some examples, the hypervisor may comprise the hardware component that facilitates provision of the one or multiple guest operating systems for use by a set of users.

### SUMMARY OF THE DISCLOSURE

The invention is defined by a hardware hypervisor that facilitates shared access to a Trusted Platform Module ("TPM") by the hypervisor and a guest operating system ("OS"), and a method, as claimed by independent claims 1 and, respectively, 11. Further embodiments are defined in their respective dependent claims. The embodiments which do not fall within the scope of the appended set of claims are to be interpreted as background information useful only for understanding the invention.

### BRIEF DESCRIPTION OF THE DRAWINGS

The following detailed description references the drawings, wherein:
FIG. 1 is a block diagram of an example system for facilitating shared access to a Trusted Platform Module ("TPM") by a hypervisor and a guest operating system ("OS");
FIG. 2 is a flow diagram of an example system for facilitating shared access to a Trusted Platform Module ("TPM") by a hypervisor and a guest OS;
FIG. 3A is a flow diagram of an example system for facilitating usage of a Trusted Platform Module ("TPM") by a hypervisor;
FIG. 3B is a flow diagram of an example system for facilitating usage of a Trusted Platform Module ("TPM") by a hypervisor; and
FIG. 4 is a flowchart of an example method for facilitating shared access to a Trusted Platform Module ("TPM") by a hypervisor and a guest OS; and
FIG. 4A is a flowchart of an example method for facilitating shared access to a Trusted Platform Module ("TPM") by a hypervisor and a guest OS.

### DETAILED DESCRIPTION

The following detailed description refers to the accompanying drawings. Wherever possible, the same reference numbers are used in the drawings and the following description to refer to the same or similar parts. While several examples are described in this document, modifications, adaptations, and other implementations are possible. Accordingly, the following detailed description does not limit the disclosed examples. Instead, the proper scope of the disclosed examples may be defined by the appended claims.

Computer systems (e.g., enterprise systems, and/or other types of computer systems with multiple users) may provide functionality to users by making available hypervisors that separate an operating system from hardware. A hypervisor may facilitate provision of one or multiple "guest" operating systems from a same hardware component. The hypervisor may allow a guest OS to be executed using less hardware than may normally be associated with an operating system. In some examples, a hypervisor may allow a stripped-down version of an operating system that only includes particular functionality to be run as a guest operating system. In some examples, a hypervisor may pass a hardware component directly to the guest operating system. The hypervisor may pass the hardware component directly to the guest operation system for security and trust reasons, performance, and/or for other technical advantages.

In some examples, the hypervisor may comprise the hardware component that facilitates provision of the one or multiple guest operating systems for use by a set of users. In other examples, a hypervisor may comprise software, a combination of hardware and software, and/or other components to provide such functionality.

In some examples, a hypervisor may comprise a thin hypervisor. A thin hypervisor may comprise, for example, a hardware component that facilitates provision of a single guest OS being executed on the hardware component at a single time. In other examples, the hypervisor may facilitate provision of multiple guest operating systems at a same time.

In examples in which security and verification of the hypervisor and the guest OS are important, a thin hypervisor may be used. For example, a thin hypervisor and guest OS may be used in conjunction with a trusted platform module ("TPM") communicably coupled thereto, which may store credentials of the hypervisor and the guest OS. A TPM may comprise, for example, a hardware component comprising a cryptographic processor. The TPM may adhere to a recognized industry standard. For example, the TPM may comply with an international standard written by the Trusted Computing Group. The TPM may comply with standard 1.2, with upcoming standard 2.0, and/or other agreed-upon industry standards.

The TPM may facilitate secure generation of cryptographic keys and their use. For example, the TPM may allow one or more of remote attestation, binding, sealing, and/or other security functionality for the hypervisor, guest OS, and/or other communicably coupled components. Remote attestation may allow a third party to verify that the software of a hardware component has not been changed. Binding may encrypt data using a cryptographic key of the TPM. Sealing may encrypt data and specify a state in which the TPM must reside in order for the data to be decrypted. The TPM may facilitate other security functionality for the hypervisor and guest OS as well. In examples in which the TPM follows the TCG standard 1.2, the TPM may comprise a single unique encryption key (or single key hierarchy) that may be used to perform authentication of hardware devices. In examples, in which the TPM follows the TCG standard 2.0, the TPM may comprise multiple unique encryption keys (e.g., stored in multiple key hierarchies) that may be used to perform authentication of a computing environment and/or its components.

The TPM may store encrypted credentials for the hypervisor and/or guest OS, whereby the credentials may be used by a platform (e.g., an enterprise system comprising the hypervisor, backend computing environment associated with the hypervisor, and/or other system) to verify the identity of the hypervisor, verify the identity of the guest OS, verify software being executed on the hypervisor, verify software being executed on the guest OS, and/or provide other verification related to one or both of the hypervisor or the guest OS. For example, the credentials stored in the TPM may be used by an enterprise system to ensure that the hypervisor and guest OS are part of the enterprise system. By making this verification, for example, a user may be protected against attacks by a malicious party that may attempt to overtake one or both components.

Attempting to make such a verification, however, may pose significant technical challenges. Technical challenges exist in allowing a hypervisor accessing the TPM to protect its sensitive data with a guest OS that also accesses the TPM. For example, there may be technical challenges in maintaining the state of the TPM. If normal storage functions of the TPM were used to store the secrets of the hypervisor (e.g., credentials, and/or other sensitive information) via a key hierarchy of the TPM, the hypervisor would have to share some state with the guest OS regarding ownership of the TPM. This would complicate the design of the system (including the hypervisor, TPM, and guest OS) and may introduce potentially complex recovery mechanisms if the states between the hypervisor and the guest OS become out of sync. Further, technical challenges may exist in providing strong security while allowing both the hypervisor and the guest OS to access the TPM. If only BIOS-level protection of the secrets were used, the high level of physical protection provided by a TPM would not be available, and the system may be more vulnerable to attack.

Accordingly, a system allowing for shared access of a TPM by a hypervisor and a guest OS may provide the access to the TPM at different times for each entity. For example, the hypervisor may access the TPM prior to the guest OS being booted, such that the hypervisor accesses the TPM at a time before the guest OS is provided direct access to the TPM. By delineating access in this time-based manner, strategically using storage of the TPM, and providing state management of the TPM, shared access of the TPM may be facilitated and a high level security may still be provided by the TPM. In some examples, access may also be delineated based on locality. If the hypervisor were removed from the booth path, the guest OS would not have access to the storage because of the alternate boot sequence that would occur.

To that end, a hardware hypervisor may facilitates shared access to a Trusted Platform Module ("TPM") by the hypervisor and a guest operating system ("OS"). The hypervisor may implement machine readable instructions that cause the hypervisor to execute functionality. For example, the hypervisor may access the TPM prior to boot of the guest OS and may obtain a software encryption key stored at the TPM. The hypervisor may then determine, using the software encryption key, a software identity from an external storage. The hypervisor may then leave the TPM in a state compatible for the guest OS. In some examples, prior to leaving the TPM in a state compatible for the guest OS, the hypervisor may take action to seal the storage that may be accessed only by the hypervisor by, for example, extending PCR measurements.

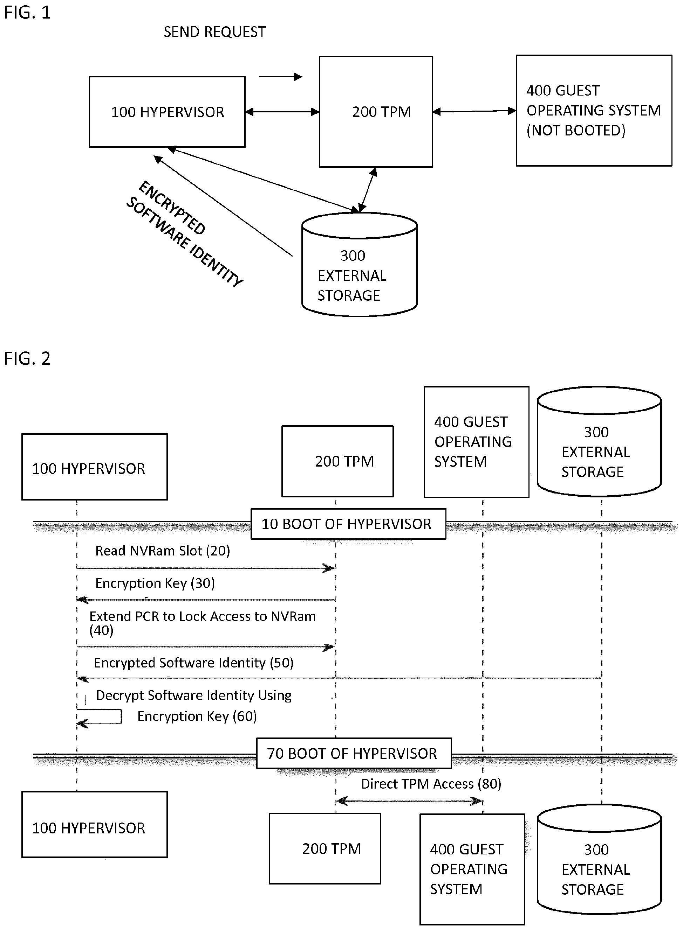

Referring now to the drawings, FIG. 1 is a block diagram of an example system for facilitating shared access to a Trusted Platform Module ("TPM") 200 by a hypervisor 100 and a guest OS 400. The system may be run on a platform provided by a backend computing environment and made available to users associated with the backend computing environment. In some examples, the backend computing environment may comprise an enterprise system, an intranet, a cloud network, and/or other computing environment.

The hypervisor 100 may comprise components to facilitate provision and management of one or more guest operating systems, facilitate communication with the backend computing environment, and/or perform other functionality. In some examples, the hypervisor 100 may comprise a thin hypervisor that facilitates provision of a single guest operating system. The hypervisor 100 may comprise hardware components that include one or more of a processor, a machine-readable storage medium, and/or other components.

The machine-readable storage medium of the hypervisor 100 may comprise machine-readable instructions that may be executed by the hypervisor (e.g., by a processor and/or other component). A processor of the hypervisor may comprise one or more central processing units (CPUs), microprocessors, and/or other hardware devices suitable for retrieval and execution of instructions stored in machine-readable storage medium of the hypervisor 100. The processor of the hypervisor may fetch, decode, and execute program instructions and/or other instructions to facilitate shared access to a TPM by the hypervisor and a guest operating system, as described below. As an alternative or in addition to retrieving and executing instructions, a processor of the hypervisor 100 may include one or more electronic circuits comprising a number of electronic components for performing the functionality of one or more of instructions stored in a machine-readable storage medium of the hypervisor 100.

In one example, the machine-readable instructions implemented by the hypervisor 100 can be part of an installation package that can be executed by a processor of the hypervisor (and/or another component) to implement the functionality described herein. In another example, the machine-readable instructions may be part of an application or applications already installed on hypervisor 100 or available to the hypervisor 100 from a backend computing environment.

A machine-readable storage medium of the hypervisor 100 may be any hardware storage device for maintaining data accessible to the hypervisor 100. For example, machine-readable storage medium may include one or more hard disk drives, solid state drives, tape drives, and/or any other storage devices. The storage devices may be located in hypervisor 100 and/or in another device in communication with hypervisor 100. For example, machine-readable storage medium may be any electronic, magnetic, optical, or other physical storage device that stores executable instructions. Thus, machine-readable storage medium may be, for example, Random Access Memory (RAM), an Electrically-Erasable Programmable Read-Only Memory (EEPROM), a storage drive, an optical disc, and the like. As described in detail below, machine-readable storage medium may be encoded with executable instructions for facilitating shared access of the TPM. As detailed below, the storage medium of the hypervisor 100 may maintain and/or store the data and information described herein.

The trusted platform module ("TPM") 200 may comprise a hardware component that adheres to a recognized standard for trusted platform modules. For example, the TPM 200 may comprise a hardware component comprising a cryptographic processor, machine-readable storage medium(s), and/or other components that are included in a specification for a TPM according to a recognized industry standard. In some examples, the TPM 200 may adhere to Trusted Computing Group ("TCG") standard 1.2. In some examples, the TPM 200 may adhere to TCG standard 2.0. The TPM may adhere to other recognized industry standards as well and is not limited to the examples described herein.

Guest OS 400 may comprise a virtualized operating system running on the hypervisor 100 (and/or on another hypervisor, a combination of a hardware and virtualized hypervisor, and/or other hypervisor based system). The guest OS 400 may access the TPM 200 during performance of its functionality.

In some examples, the hypervisor 100 may be communicably coupled to a BIOS. The BIOS may facilitate boot of the hypervisor 100, boot of the guest OS 400, state maintenance for the TPM 200, and/or other functionality. For example, the BIOS may configure the TPM 200 with PCR measurements. In another example, the BIOS may facilitate changes in ownership control of the TPM 200 between the hypervisor 100, guest OS 400, and/or other entities. The BIOS may execute other functionality as well and is not limited to the example functionality described herein.

The hypervisor 100 and guest OS 400 may share access to the TPM 200 based on the use of separate time windows for accessing the TPM 200. For example, the hypervisor 100 and guest OS 400 may have time-division based access to the TPM 200, whereby the hypervisor 100 accesses the TPM 200 before the guest OS 400 is booted. In this access, the hypervisor 100 may obtain any credentials and/or other secrets stored via the TPM 200. Once the credentials and/or other secrets are accessed, the TPM 200 may be left in a state compatible with the expected state of the guest OS 400. In some examples, the hypervisor-specific storage may be sealed (e.g, by extending PCR measurements) prior to leaving the TPM 200 in the compatible state.

In some examples, the change in state may be facilitated by the BIOS and may also involve extending PCR measurements. For example, a boot loader of the BIOS may extend the measurements based on a hash of boot loader files, and the hypervisor may extend the measurements based on hypervisor root files. The measurements may be extended in order to prevent access to sealed storage locations. If a measurement matches an expected value, access may be granted to a sealed storage location. If the measurement is extended, access to that storage location may be unauthorized.

In order to have credentials and/or other secrets stored via the TPM 200, the hypervisor 100 may need to initialize the TPM 200. During initialization, the hypervisor 100 may take temporary ownership of the TPM 200. The required credentials and/or other secrets may be generated by the hypervisor 100 (and/or made available via the TPM 200) and then stored in the TPM 200, external sealed storage, and/or other storage media. Ownership of the TPM 200 may then be cleared and the TPM 200 may be returned to its original state (with the exception of the stored secrets). In some examples, the PCR measurements may also be extended in addition to clearing ownership of the TPM 200. During boot of the hypervisor 100 (and before boot of the guest OS 400), the hypervisor 100 may unlock its secrets via the TPM 200 and/or external storage and store them in a machine-readable storage medium of the hypervisor 100. The hypervisor 100 may then lock access to the secret (e.g., using a PCR extend operation and/or otherwise extending PCR measurements). The hypervisor 100 may then pass execution of the TPM 200 to the guest OS 400, which may have direct access to the TPM 200.

FIG. 2 is a flow diagram of an example method for facilitating shared access to a Trusted Platform Module ("TPM") by a hypervisor and a guest OS. Although execution of the methods described below are with reference to system described in FIG. 1, other suitable devices for execution of this method will be apparent to those of skill in the art. The flow diagram described in FIG. 2 and other figures may be implemented in the form of executable instructions stored on a machine-readable storage medium, such as the storage medium of the hypervisor, by one or more components described herein, and/or in the form of electronic circuitry.

In an operation 10, the hypervisor 100 may be booted. As mentioned above, the hypervisor 100 may be coupled with a BIOS that facilitates boot of the hypervisor 100 and the guest OS 400. In an operation 20, the hypervisor 100 may read the NVRam slot of the TPM 200. In some examples, the hypervisor 100 may read the NVRam slot based on the PCR measurements of the hypervisor 100. In an operation 30, the hypervisor 100 may obtain, from the NVRam slot of the TPM 200, a software encryption key. In an operation 40, the hypervisor 100 may extend the PCR to lock access to the NVRam. In an operation 50, the hypervisor 100 may receive, from a TPM storage 300, the encrypted software identity. The hypervisor 100 may receive the encrypted software identity from the TPM storage 300 based on PCR measurements of the hypervisor and/or other information related to the hypervisor 100. The hypervisor 100, in an operation 60, may decrypt the encrypted software identity using the software encryption key obtained from the TPM 200. In some examples, the hypervisor 100 may seal access to the NVRam slot of the TPM 200. The hypervisor may seal access to the NVRam slot of the TPM 200 by, for example, extending PCR measurements, and/or otherwise sealing access. The hypervisor 100 may leave the TPM 200 in a state compatible with the guest OS 400. In an operation 70, the guest OS 400 may then be booted, and, in an operation 80, may have direct access to the TPM 200.

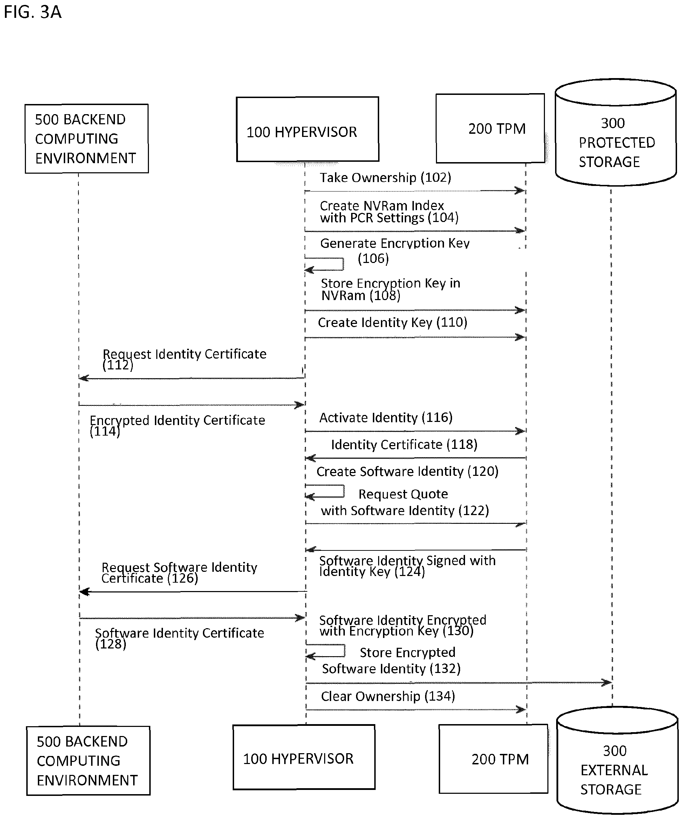

In some examples, before the hypervisor 100 may access the TPM 200 prior to boot of the guest OS 400 to obtain secrets that the hypervisor 100 stored via the TPM 200, the hypervisor 100 may need to initialize the TPM 200. In some examples, the initialization may only need to occur once (e.g., a single time on first boot after install). FIG. 3A is a flow diagram of an example method for facilitating usage of a Trusted Platform Module ("TPM") by a hypervisor. In particular, the flow diagram of FIG. 3A may depict an example method by which the hypervisor 100 initializes the TPM 200 prior to the boot of the guest OS 400.

In an operation 102, the hypervisor 100 may take ownership of the TPM 200. For example, the hypervisor 100 may send a command understood by the TCG standard adhered to by the TPM 200 that would grant the hypervisor control of the TPM.

In an operation 104, the hypervisor 100 may create an NVRam index with PCR measurements and send that to the TPM 200. The NVRam may comprise a memory region of the TPM 200 for applications, components, and/or other entities to use to store secrets. PCR measurements may be used by the TPM 200 to verify that an entity attempting to access the NVRam is legitimate. As such, the hypervisor 100 may decide which PCR measurements to include in the NVRam index sent to the TPM 200, and may send those same PCR measurements to access the NVRam of the TPM 200 at a later time.

In an operation 106, the hypervisor 100 may generate a software encryption key. For example, the hypervisor 100 may generate the software encryption key using the AES standard and/or any other cryptographic standard that provides similar security strength. In some examples, the hypervisor 100 may generate the software encryption key based on information related to the hypervisor 100, the PCR measurements stored in the NVRam, a different set of PCR measurements, a backend computing system 500 communicably coupled to the hypervisor, and/or other information related to the hypervisor 100.

In an operation 108, the hypervisor 100 may send the software encryption key to the TPM 200. For example, the TPM 200 may store the software encryption key in the NVRam, or in another storage of the TPM 200.

In an operation 110, the hypervisor 100 may create an identity key and may send the identity key to the TPM 200. In some examples, the hypervisor 100 may create the identity key based on PCR measurements of the hypervisor 100 and/or based on other information related to the hypervisor 100. The hypervisor 100 may create the identity key using, for example, a standard cryptographic protocol. In some examples, the TPM 200 may temporarily store the identity key.

In an operation 112, the hypervisor 100 may request a certificate from a backend computing environment 500 communicably coupled to the hypervisor 100. For example, the hypervisor 100 request a certificate certifying the identity key. To that end, the certificate request sent by the hypervisor 100 may comprise the identity key, an endorsement key certificate, and/or other information related to certifying identity. In some examples, by certifying the identity key, the certificate provided by the backend computing environment 500 may certify the identity of the TPM.

In an operation 114 and responsive to the identity key being certified, the hypervisor 100 may receive, from the backend computing environment 500, an encrypted certificate certifying the identity key.

In an operation 116, the hypervisor 100 may activate the identity of the TPM 200 responsive to receiving the encrypted certificate certifying the identity key. For example, the hypervisor 100 may activate the TPM 200 according to the TCG standard to which the TPM 200 adheres.

In an operation 118, the hypervisor 100 may receive an identity certificate from the TPM 200. For example, the hypervisor 100 may receive the identity certificate responsive to activating the identity of the TPM 200.

In an operation 120, the hypervisor 100 may create a software identity. The hypervisor 100 may create the software identity based on the received identity certificate, based on information related to the hypervisor 100, based on information related to the TPM 200, based on information from the backend computing environment 500, and/or based on other information.

In an operation 122, the hypervisor 100 may request a quote from the TPM 200, whereby the request may comprise the software identity. For example, the hypervisor 100 may request the quote for purposes of identity verification of the hypervisor, for purposes of verifying that the hypervisor 100 is associated with the backend computing environment 500, for purposes of verifying software executing on the hypervisor 100, and/or for other purposes.

In an operation 124, the TPM 200 may sign the software identity with the temporarily stored identity key and may send the signed software identity to the hypervisor 100. In this operation, the hypervisor 100 may receive the signed software identity from the TPM 200. In some examples, the TPM 200 may discard the temporarily stored identity key responsive to signing the software identity with the temporarily stored identity key and/or responsive to sending the signed software identity to the hypervisor 100.

In an operation 126, the hypervisor 100 may request, from the backend computing environment 500, a certificate certifying the software identity. The certificate request may comprise, for example, the signed software identity and the certificate of the identity key previously received from the backend computing environment 500.

In an operation 128, the hypervisor 100 may receive the software identity certificate from the backend computing environment 500. In some examples, the hypervisor 100 may receive the software identity certificate responsive to the backend computing environment 500 certifying that the identity of the hypervisor 100 was legitimate, certifying that the hypervisor 100 was associated with the backend computing environment 500, certifying that software associated with the software identity was associated with and/or approved by the backend computing environment 500, and/or responsive to receiving other information from the backend computing environment 500.

In an operation 130, responsive to receiving the software identity certificate, the hypervisor 100 may encrypt the software identity with the software encryption key.

In an operation 132, the hypervisor 100 may store the encrypted software identity in a storage 300 that is external to the hypervisor 100, the TPM 200, and/or other components of the system. The external storage 300 may be encrypted based on the software encryption key stored in the TPM 200.

In an operation 134, the hypervisor 100 may then clear ownership of the TPM, leaving the TPM in a state compatible with the guest OS 400.

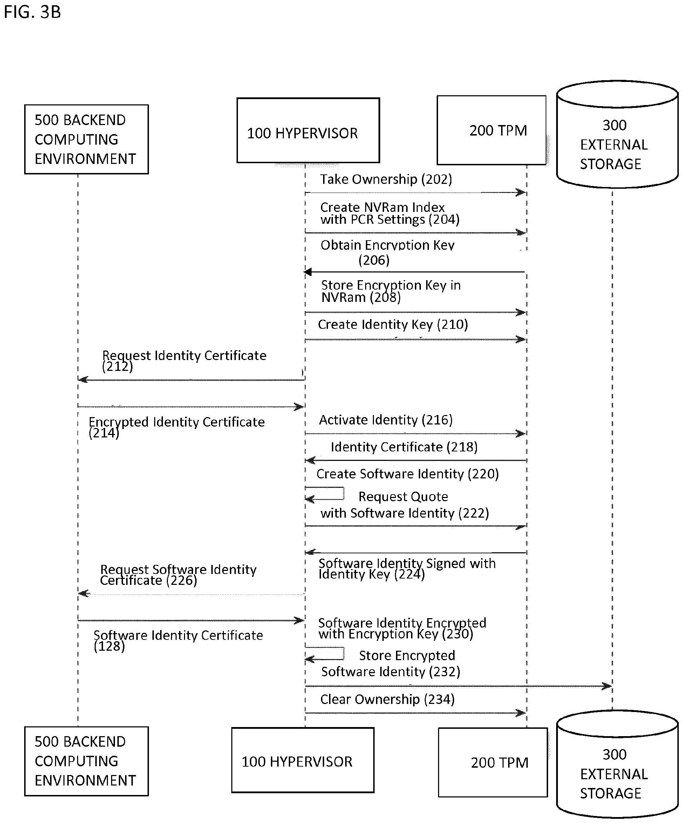

FIG. 3B is a flow diagram of an example method for facilitating usage of a Trusted Platform Module ("TPM") by a hypervisor. FIG. 3B may depict another example method by which the hypervisor 100 initializes the TPM 200 prior to boot of the guest OS 400. In some examples, the method depicted in FIG. 3B may be the same as or similar to the method depicted in FIG. 3A, with the exception of the use of the software encryption key. In FIG. 3A, in operation 106, the software encryption key may be generated by the hypervisor. In contrast, in FIG. 3B, in operation 206, the software encryption key may be obtained from the TPM 200. The software encryption key may be made available via the TPM 200, which may have multiple key hierarchy in which multiple cryptographic keys may be available for use. In some examples, the flow diagram of FIG. 3A may be performed in an environment with a TPM 200 adhering to the TCG standard 1.2, whereas the flow diagram of 3B may be performed in an environment with a TPM 200 adhering to the TCG standard 2.0.

In some examples, instead of encrypting the software identity with the software encryption key prior to storage in the external storage, the hypervisor 100 may store the software identity in encrypted external storage. In these examples, the encrypted storage may be encrypted using the software encryption key. In the example described in FIGS. 3A and 3B, the encrypted storage may be external storage encrypted with an encryption key separate from the keys discussed herein, may be encrypted with the software encryption key, and/or may be otherwise encrypted. In another example in conjunction with the methods described in FIGS. 3A and 3B, the external storage may be standard storage and may be unencrypted.

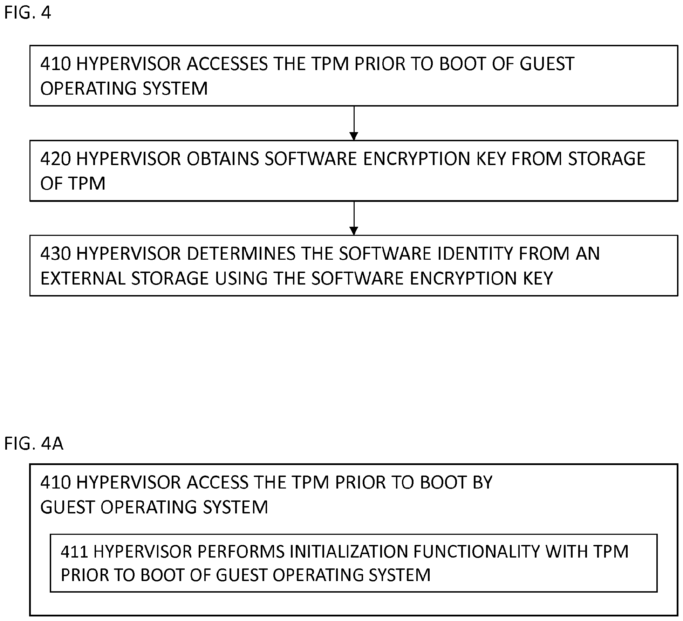

FIG. 4 is a flowchart of an example method for facilitating shared access to a Trusted Platform Module by a hypervisor and a guest OS.

In an operation 410, a hypervisor communicably coupled to a backend computing environment may access a TPM prior to boot of a guest operating system supported by the hypervisor. In some examples, the system (and/or the hypervisor 100) of FIG. 1 may access the TPM prior to boot of the guest OS. The hypervisor (and/or other system components of FIG. 1) may access the TPM in a manner the same as or similar to that described above with respect to FIGS. 1-3B.

In some examples, the access of the TPM by the hypervisor before boot of the guest OS may be performed in various manners. FIG. 4A is a flowchart of an example method for facilitating shared access to a Trusted Platform Module by a hypervisor and a guest OS.

In an operation 411, the hypervisor may perform initialization functionality of the TPM prior to boot of the guest OS. In some examples, the system (and/or the hypervisor 100) of FIG. 1 may perform the initialization functionality. The hypervisor (and/or other system components of FIG. 1) may initialize the TPM in a manner the same as or similar to that described above with respect to FIGS. 1-3B.

Returning to FIG. 4, in an operation 420, the hypervisor may obtain a software encryption key from a storage of the TPM. In some examples, the system (and/or the hypervisor 100) of FIG. 1 may obtain the software encryption key. The hypervisor (and/or other system components of FIG. 1) may obtain the software encryption key in a manner the same as or similar to that described above with respect to FIGS. 1-3B.

In an operation 430, the hypervisor may determine a software identity from an external storage using the software encryption key. In some examples, the system (and/or the hypervisor 100) of FIG. 1 may determine the software identity. The hypervisor (and/or other system components of FIG. 1) may determine the software identity in a manner the same as or similar to that described above with respect to FIGS. 1-3B.

The foregoing disclosure describes a number of example embodiments for facilitating shared access to a Trusted Platform Module ("TPM") by a hypervisor and a guest OS. The disclosed examples may include systems, devices, computer-readable storage media, and methods for facilitating shared access to a Trusted Platform Module ("TPM") by a hypervisor and a guest OS. For purposes of explanation, certain examples are described with reference to the components illustrated in FIGS. 1-4A. The functionality of the illustrated components may overlap, however, and may be present in a fewer or greater number of elements and components. Further, all or part of the functionality of illustrated elements may co-exist or be distributed among several geographically dispersed locations. Moreover, the disclosed examples may be implemented in various environments and are not limited to the illustrated examples.

Further, the sequence of operations described in connection with FIGS. 1-4A are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples. All such modifications and variations are intended to be included within the scope of this disclosure, as defined by the following appended set of claims.

## Claims

1. A hardware hypervisor (100) configured to facilitate shared access to a Trusted Platform Module, TPM, (200) by the hardware hypervisor (100) and a guest operating system, OS, (400) the hardware hypervisor (100) comprising a machine readable storage medium encoded with executable instructions that cause the hardware hypervisor (100) to:
access (410) the TPM (200) prior to boot of the guest OS (400);
obtain (420) a software encryption key from a first storage of the TPM (200);
determine (430), using the software encryption key, a software identity from an external storage; and
leave the TPM (200) in a state compatible for the guest OS (400).

2. The hardware hypervisor (100) of claim 1, wherein the machine readable storage medium is encoded with executable instructions that cause the hardware hypervisor (100) to:
responsive to obtaining the software encryption key, extend (40) the PCR measurements.

3. The hardware hypervisor (100) of claim 2, wherein the machine readable storage medium is encoded with executable instructions that cause the hardware hypervisor (100) to:
initialize (411) the TPM (200) prior to boot of the guest OS (400) by:
storing (208) the software encryption key in the first storage of the TPM (200);
generating (220) the software identity;
encrypting (230) the software identity using the software encryption key; and
storing (232) the encrypted software identity in the external storage.

4. The hardware hypervisor (100) of claim 3, wherein the machine readable storage medium is encoded with executable instructions that cause the hardware hypervisor (100) to:
receive (206) the software encryption key from the TPM (200) based on provided PCR measurements.

5. The hardware hypervisor (100) of claim 3, wherein the machine readable storage medium is encoded with executable instructions that cause the hardware hypervisor (100) to initialize the TPM (200) prior to boot of the guest OS (400) by:
receiving (128) a software identity certificate for the software identity based on a backend system certifying the software identity, wherein the backend system is communicably coupled to the hardware hypervisor (100).

6. The hardware hypervisor (100) of claim 5, wherein the machine readable storage medium is encoded with executable instructions that cause the hardware hypervisor (100) to initialize the TPM (200) prior to boot of the guest OS (400) by:
generating (210) an identity key;
sending (210) the identity key to the TPM (200) for temporary storage;
requesting (212) an identity certificate for the identity key from the backend system; and
responsive to the request, receiving (214) the identity certificate from the backend system.

7. The hardware hypervisor (100) of claim 6, wherein the machine readable storage medium is encoded with executable instructions that cause the hardware hypervisor (100) to initialize the TPM (200) prior to boot of the guest OS (400) by:
receiving (224), from the TPM (200), a signed software identity, wherein the signed software identity is signed by the identity key temporarily stored in the TPM (200);
sending (226), to the backend system, a request for a software identity certificate, the request comprising the signed software identity and identity certificate; and
responsive to sending the request for the software identity certificate, receiving (128), from the backend system, the software identity certificate.

8. The hardware hypervisor (100) of claim 7, wherein the machine readable storage medium is encoded with executable instructions that cause the hardware hypervisor (100) to initialize (411) the TPM (200) prior to boot of the guest OS (400) by:
responsive to receiving the software identity certificate, encrypting (230) the software identity with the software encryption key;
sending (232) the encrypted software identity to the external storage.

9. The hardware hypervisor (100) of claim 1, the machine readable storage medium is encoded with executable instructions that cause the hardware hypervisor (100) to:
generate (106) the software encryption key.

10. The hardware hypervisor (100) of claim 1, wherein the software encryption key comprises an encryption key available via the TPM (200).

11. A method for facilitating shared access to a Trusted Platform Module, TPM, (200) by a hardware hypervisor (100) and a guest operating system, OS, (400) the method comprising:
accessing (410), by the hardware hypervisor (100), the TPM (200) prior to boot of the guest OS (400);
obtaining (420), by the hardware hypervisor (100), a software encryption key from a first storage of the TPM (200);
determining (430), by the hardware hypervisor (100), a software identity from an external storage using the software encryption key; and
leaving the TPM (200) in a state compatible for the guest OS (400).

12. The method of claim 11, further comprising:
initializing (411), by the hardware hypervisor (100), the TPM (200), wherein the hardware hypervisor (100) initializes the TPM (200) by:
claiming ownership (202) of the TPM (200);
storing (208) the software encryption key in the first storage of the TPM (200);
generating (220) the software identity, wherein the software identity comprises information related to a backend system communicably coupled to the hardware hypervisor (100);
encrypting (230) the software identity using the software encryption key; and
storing (232), by the hardware hypervisor (100), the encrypted software identity in the external storage; and
receiving (128), by the hardware hypervisor (100), a software identity certificate for the software identity based on a backend system certifying the software identity is associated with the hypervisor.

13. The method of claim 12, wherein the hardware hypervisor (100) initializes the TPM (200) prior to boot of the guest OS (400) by:
generating (210) an identity key;
sending (210) the identity key to the TPM (200) for temporary storage;
requesting (212) an identity certificate for the identity key from the backend system;
responsive to the request, receiving (214) the identity certificate from the backend system;
receiving (224), from the TPM (200), a signed software identity, wherein the signed software identity is signed by the identity key temporarily stored in the TPM (200);
sending (226), to the backend system, a request for a software identity certificate , the request comprising the signed software identity and identity certificate;
responsive to sending the request for the software identity certificate, receiving (128), from the backend system, the software identity certificate;
responsive to receiving the software identity certificate, encrypting (230) the software identity with the software encryption key;
sending (232) the encrypted software identity to the external storage.

14. The method of claim 11, further comprising:
generating (106), by the hardware hypervisor (100), the software encryption key.

15. The method of claim 11, wherein the software encryption key comprises an encryption key available via the TPM (200).

## Patentansprüche

1. Hardware-Hypervisor (100), der konfiguriert ist, um einen gemeinsamen Zugriff durch den Hardware-Hypervisor (100) und ein Gastbetriebssystem (OS) (400) auf ein vertrauenswürdiges Plattformmodul (*Trusted Platform Module* - TPM) (200) zu unterstützen, wobei der Hardware-Hypervisor (100) ein maschinenlesbares Speichermedium umfasst, das mit ausführbaren Anweisungen codiert ist, die den Hardware-Hypervisor (100) zu Folgendem veranlassen:
Zugreifen (410) auf das TPM (200) vor dem Starten des Gastbetriebssystems (OS) (400);
Erhalten (420) eines Softwareverschlüsselungsschlüssels aus einem ersten Speicher des TPM (200);
Bestimmen (430) einer Softwareidentität aus einem externen Speicher unter Verwendung des Softwareverschlüsselungsschlüssels; und
Belassen des TPM (200) in einem für das Gastbetriebssystem (OS) (400) kompatiblen Zustand.

2. Hardware-Hypervisor (100) nach Anspruch 1, wobei das maschinenlesbare Speichermedium mit ausführbaren Anweisungen codiert ist, die den Hardware-Hypervisor (100) zu Folgendem veranlassen:
Erweitern (40) der PCR-Messungen als Reaktion auf den Softwareverschlüsselungsschlüssel.

3. Hardware-Hypervisor (100) nach Anspruch 2, wobei das maschinenlesbare Speichermedium mit ausführbaren Anweisungen codiert ist, die den Hardware-Hypervisor (100) zu Folgendem veranlassen:
Initialisieren (411) des TPM (200) vor dem Starten des Gastbetriebssystems (OS) (400) durch Folgendes:
Speichern (208) des Softwareverschlüsselungsschlüssels in dem ersten Speicher des TPM (200);
Erzeugen (220) der Softwareidentität;
Verschlüsseln (230) der Softwareidentität unter Verwendung des Softwareverschlüsselungsschlüssels; und
Speichern (232) der verschlüsselten Softwareidentität in dem externen Speicher.

4. Hardware-Hypervisor (100) nach Anspruch 3, wobei das maschinenlesbare Speichermedium mit ausführbaren Anweisungen codiert ist, die den Hardware-Hypervisor (100) zu Folgendem veranlassen:
Empfangen (206) des Softwareverschlüsselungsschlüssels von dem TPM (200) basierend auf bereitgestellten PCR-Messungen.

5. Hardware-Hypervisor (100) nach Anspruch 3, wobei das maschinenlesbare Speichermedium mit ausführbaren Anweisungen codiert ist, die den Hardware-Hypervisor (100) veranlassen, das TPM (200) vor dem Starten des Gastbetriebssystems (OS) (400) durch Folgendes zu initialisieren:
Empfangen (128) eines Softwareidentitätszertifikats für die Softwareidentität basierend auf einem Backend-System, das die Softwareidentität zertifiziert, wobei das Backend-System mit dem Hardware-Hypervisor (100) kommunikativ gekoppelt ist.

6. Hardware-Hypervisor (100) nach Anspruch 5, wobei das maschinenlesbare Speichermedium mit ausführbaren Anweisungen codiert ist, die den Hardware-Hypervisor (100) veranlassen, das TPM (200) vor dem Starten des Gastbetriebssystems (OS) (400) durch Folgendes zu initialisieren:
Erzeugen (210) eines Identitätsschlüssels;
Senden (210) des Identitätsschlüssels an das TPM (200) für eine temporäre Speicherung;
Anfordern (212) eines Identitätszertifikats für den Identitätsschlüssel von dem Backend-System; und
als Reaktion auf die Anforderung, Empfangen (214) des Identitätszertifikats von dem Backend-System.

7. Hardware-Hypervisor (100) nach Anspruch 6, wobei das maschinenlesbare Speichermedium mit ausführbaren Anweisungen codiert ist, die den Hardware-Hypervisor (100) veranlassen, das TPM (200) vor dem Starten des Gastbetriebssystems (OS) (400) durch Folgendes zu initialisieren:
Empfangen (224) einer signierten Softwareidentität von dem TPM (200), wobei die signierte Softwareidentität durch den Identitätsschlüssel, der temporär in dem TPM (200) gespeichert ist, signiert wird;
Senden (226) einer Anforderung für ein Softwareidentitätszertifikat an das Backend-System, wobei die Anforderung die signierte Softwareidentität und das signierte Identitätszertifikat umfasst; und
als Reaktion auf das Senden der Anforderung für das Softwareidentitätszertifikat, Empfangen (128) des Softwareidentitätszertifikats von dem Backend-System.

8. Hardware-Hypervisor (100) nach Anspruch 7, wobei das maschinenlesbare Speichermedium mit ausführbaren Anweisungen codiert ist, die den Hardware-Hypervisor (100) veranlassen, das TPM (200) vor dem Starten des Gastbetriebssystems (OS) (400) durch Folgendes zu initialisieren (411):
als Reaktion auf das Empfangen des Softwareidentitätszertifikats, Verschlüsseln (230) der Softwareidentität mit dem Softwareverschlüsselungsschlüssel;
Senden (232) der verschlüsselten Softwareidentität an den externen Speicher.

9. Hardware-Hypervisor (100) nach Anspruch 1, wobei das maschinenlesbare Speichermedium mit ausführbaren Anweisungen codiert ist, die den Hardware-Hypervisor (100) zu Folgendem veranlassen:
Erzeugen (106) des Softwareverschlüsselungsschlüssels.

10. Hardware-Hypervisor (100) nach Anspruch 1, wobei der Softwareverschlüsselungsschlüssel einen Verschlüsselungsschlüssel umfasst, der über das TPM (200) verfügbar ist.

11. Verfahren zum Unterstützen des gemeinsamen Zugriffs auf ein vertrauenswürdiges Plattformmodul (TPM) (200) durch einen Hardware-Hypervisor (100) und ein Gastbetriebssystem (OS) (400), wobei das Verfahren Folgendes umfasst:
Zugreifen (410) auf das TPM (200) durch den Hardware-Hypervisor (100) vor dem Hochfahren des Gastbetriebssystems (OS) (400);
Erhalten (420) eines Softwareverschlüsselungsschlüssels aus einem ersten Speicher des TPM (200) durch den Hardware-Hypervisor (100);
Bestimmen (430) einer Softwareidentität aus einem externen Speicher unter Verwendung des Softwareverschlüsselungsschlüssels durch den Hardware-Hypervisor (100); und
Belassen des TPM (200) in einem für das Gastbetriebssystem (OS) (400) kompatiblen Zustand.

12. Verfahren nach Anspruch 11, ferner Folgendes umfassend:
Initialisieren (411) des TPM (200) durch den Hardware-Hypervisor (100), wobei der Hardware-Hypervisor (100) das TPM (200) durch Folgendes initialisiert:
Beanspruchen des Besitzes (202) des TPM (200);
Speichern (208) des Softwareverschlüsselungsschlüssels in dem ersten Speicher des TPM (200);
Erzeugen (220) der Softwareidentität, wobei die Softwareidentität Informationen umfasst, die sich auf ein Backend-System beziehen, das mit dem Hardware-Hypervisor (100) kommunikativ gekoppelt ist;
Verschlüsseln (230) der Softwareidentität unter Verwendung des Softwareverschlüsselungsschlüssels; und
Speichern (232) der verschlüsselten Softwareidentität in dem externen Speicher durch den Hardware-Hypervisor (100); und
Empfangen (128) eines Softwareidentitätszertifikats für die Softwareidentität basierend auf einem Backend-System, das die Softwareidentität zertifiziert, dass die Softwareidentität mit dem Hypervisor verknüpft ist, durch den Hardware-Hypervisor (100).

13. Verfahren nach Anspruch 12, wobei der Hardware-Hypervisor (100) das TPM (200) vor dem Starten des Gastbetriebssystems (OS) (400) durch Folgendes initialisiert:
Erzeugen (210) eines Identitätsschlüssels;
Senden (210) des Identitätsschlüssels für eine temporäre Speicherung;
Anfordern (212) eines Identitätszertifikats für den Identitätsschlüssel von dem Backend-System;
als Reaktion auf das Anfordern, Empfangen (214) des Identitätszertifikats von dem Backend-System;
Empfangen (224) einer signierten Softwareidentität von dem TPM (200), wobei die signierte Softwareidentität durch den Identitätsschlüssel, der temporär in dem TPM (200) gespeichert ist, signiert wird;
Senden (226) einer Anforderung für ein Softwareidentitätszertifikat an das Backend-System, wobei die Anforderung die signierte Softwareidentität und das signierte Identitätszertifikat umfasst;
als Reaktion auf das Senden der Anforderung für das Softwareidentitätszertifikat, Empfangen (128) des Softwareidentitätszertifikats von dem Backend-System;
als Reaktion auf das Empfangen des Softwareidentitätszertifikats, Verschlüsseln (230) der Softwareidentität mit dem Softwareverschlüsselungsschlüssel;
Senden (232) der verschlüsselten Softwareidentität an den externen Speicher.

14. Verfahren nach Anspruch 11, ferner Folgendes umfassend:
Erzeugen (106) des Softwareverschlüsselungsschlüssels durch den Hardware-Hypervisor (100).

15. Verfahren nach Anspruch 11, wobei der Softwareverschlüsselungsschlüssel einen Verschlüsselungsschlüssel umfasst, der über das TPM (200) verfügbar ist.

## Revendications

1. Hyperviseur matériel (100) configuré pour faciliter l'accès partagé à un module de plateforme sécurisée, TPM, (200) par l'hyperviseur matériel (100) et un système d'exploitation invité, OS, (400), l'hyperviseur matériel (100) comprenant un support de stockage lisible par machine codé avec des instructions exécutables qui amènent l'hyperviseur matériel (100) à :
accéder (410) au TPM (200) avant le démarrage de l'OS invité (400) ;
obtenir (420) une clé de cryptage de logiciel à partir d'une première mémoire du TPM (200) ;
déterminer (430), à l'aide de la clé de cryptage de logiciel, une identité de logiciel à partir d'une mémoire externe ; et
laisser le TPM (200) dans un état compatible pour l'OS invité (400).

2. Hyperviseur matériel (100) selon la revendication 1, dans lequel le support de stockage lisible par machine est codé avec des instructions exécutables qui amènent l'hyperviseur matériel (100) à :
en réponse à l'obtention de la clé de cryptage de logiciel, étendre (40) les mesures PCR.

3. Hyperviseur matériel (100) selon la revendication 2, dans lequel le support de stockage lisible par machine est codé avec des instructions exécutables qui amènent l'hyperviseur matériel (100) à :
initialiser (411) le TPM (200) avant le démarrage de l'OS invité (400) par :
le stockage (208) de la clé de cryptage de logiciel dans la première mémoire du TPM (200) ;
la génération (220) de l'identité de logiciel ;
le cryptage (230) de l'identité du logiciel à l'aide de la clé de cryptage de logiciel ; et
le stockage (232) de l'identité de logiciel cryptée dans la mémoire externe.

4. Hyperviseur matériel (100) selon la revendication 3, dans lequel le support de stockage lisible par machine est codé avec des instructions exécutables qui amènent l'hyperviseur matériel (100) à :
recevoir (206) la clé de cryptage de logiciel du TPM (200) sur la base des mesures PCR fournies.

5. Hyperviseur matériel (100) selon la revendication 3, dans lequel le support de stockage lisible par machine est codé avec des instructions exécutables qui amènent l'hyperviseur matériel (100) à initialiser le TPM (200) avant le démarrage de l'OS invité (400) par :
la réception (128) d'un certificat d'identité de logiciel pour l'identité de logiciel sur la base d'un système dorsal certifiant l'identité de logiciel, le système dorsal étant couplé en communication à l'hyperviseur matériel (100).

6. Hyperviseur matériel (100) selon la revendication 5, dans lequel le support de stockage lisible par machine est codé avec des instructions exécutables qui amènent l'hyperviseur matériel (100) à initialiser le TPM (200) avant le démarrage de l'OS invité (400) par :
la génération (210) d'une clé d'identité ;
l'envoi (210) de la clé d'identité au TPM (200) pour un stockage temporaire ;
la demande (212) d'un certificat d'identité pour la clé d'identité à partir du système dorsal ; et
en réponse à la demande, la réception (214) du certificat d'identité à partir du système dorsal.

7. Hyperviseur matériel (100) selon la revendication 6, dans lequel le support de stockage lisible par machine est codé avec des instructions exécutables qui amènent l'hyperviseur matériel (100) à initialiser le TPM (200) avant le démarrage de l'OS invité (400) par :
la réception (224), à partir du TPM (200), d'une identité de logiciel signée, l'identité de logiciel signée étant signée par la clé d'identité temporairement stockée dans le TPM (200) ;
l'envoi (226), au système dorsal, d'une demande d'un certificat d'identité de logiciel, la demande comprenant l'identité de logiciel signée et le certificat d'identité ; et
en réponse à l'envoi de la demande du certificat d'identité de logiciel, la réception (128), à partir du système dorsal, du certificat d'identité de logiciel.

8. Hyperviseur matériel (100) selon la revendication 7, dans lequel le support de stockage lisible par machine est codé avec des instructions exécutables qui amènent l'hyperviseur matériel (100) à initialiser (411) le TPM (200) avant le démarrage de l'OS invité (400) par :
en réponse à la réception du certificat d'identité de logiciel, le cryptage (230) de l'identité de logiciel avec la clé de cryptage de logiciel ;
l'envoi (232) de l'identité de logiciel cryptée à la mémoire externe.

9. Hyperviseur matériel (100) selon la revendication 1, le support de stockage lisible par machine est codé avec des instructions exécutables qui amènent l'hyperviseur matériel (100) à :
générer (106) la clé de cryptage de logiciel.

10. Hyperviseur matériel (100) selon la revendication 1, dans lequel la clé de cryptage de logiciel comprend une clé de cryptage disponible par l'intermédiaire du TPM (200).

11. Procédé pour faciliter l'accès partagé à un module de plateforme sécurisée, TPM, (200) par un hyperviseur matériel (100) et un système d'exploitation invité, OS, (400), le procédé comprenant :
l'accès (410), par l'hyperviseur matériel (100), au TPM (200) avant le démarrage de l'OS invité (400) ;
l'obtention (420), par l'hyperviseur matériel (100), d'une clé de cryptage de logiciel à partir d'une première mémoire du TPM (200) ;
la détermination (430), par l'hyperviseur matériel (100), d'une identité de logiciel à partir d'une mémoire externe à l'aide de la clé de cryptage de logiciel ; et
le fait de laisser le TPM (200) dans un état compatible pour l'OS invité (400).

12. Procédé selon la revendication 11, comprenant en outre :
l'initialisation (411), par l'hyperviseur matériel (100), du TPM (200), l'hyperviseur matériel (100) initialisant le TPM (200) par :
la revendication de la propriété (202) du TPM (200) ;
le stockage (208) de la clé de cryptage de logiciel dans la première mémoire du TPM (200) ;
la génération (220) de l'identité de logiciel, l'identité de logiciel comprenant des informations relatives à un système dorsal couplé en communication à l'hyperviseur matériel (100) ;
le cryptage (230) de l'identité du logiciel à l'aide de la clé de cryptage de logiciel ; et
le stockage (232), par l'hyperviseur matériel (100), de l'identité de logiciel cryptée dans la mémoire externe ; et
la réception (128), par l'hyperviseur matériel (100), d'un certificat d'identité de logiciel pour l'identité de logiciel sur la base d'un système dorsal certifiant que l'identité de logiciel est associée à l'hyperviseur.

13. Procédé selon la revendication 12, dans lequel l'hyperviseur matériel (100) initialise le TPM (200) avant le démarrage de l'OS invité (400) par :
la génération (210) d'une clé d'identité ;
l'envoi (210) de la clé d'identité au TPM (200) pour un stockage temporaire ;
la demande (212) d'un certificat d'identité pour la clé d'identité à partir du système dorsal ;
en réponse à la demande, la réception (214) du certificat d'identité à partir du système dorsal ;
la réception (224), à partir du TPM (200), d'une identité de logiciel signée, l'identité de logiciel signée étant signée par la clé d'identité temporairement stockée dans le TPM (200) ;
l'envoi (226), au système dorsal, d'une demande d'un certificat d'identité de logiciel, la demande comprenant l'identité de logiciel signée et le certificat d'identité ;
en réponse à l'envoi de la demande du certificat d'identité de logiciel, la réception (128), à partir du système dorsal, du certificat d'identité de logiciel ;
en réponse à la réception du certificat d'identité de logiciel, le cryptage (230) de l'identité de logiciel avec la clé de cryptage de logiciel ;
l'envoi (232) de l'identité de logiciel cryptée à la mémoire externe.

14. Procédé selon la revendication 11, comprenant en outre :
la génération (106), par l'hyperviseur matériel (100), de la clé de cryptage de logiciel.

15. Procédé selon la revendication 11, dans lequel la clé de cryptage de logiciel comprend une clé de cryptage disponible par l'intermédiaire du TPM (200).
